# EUROPEAN PATENT APPLICATION

(11) **EP 4 790 806 A1**
(43) Date of publication of application: **12.08.2026**
(21) Application number: 25227569.8
(22) Date of filing: 30.12.2025
(51) Int. Cl.: H01M 50/204, H01M 50/211, H01M 50/229, H01M 50/242, H01M 50/249, H01M 50/289, H01M 50/231

(54) **STORAGE BATTERY APPARATUS AND STORAGE BATTERY APPARATUS VEHICLE MOUNTING STRUCTURE**

(30) Priority: 05.02.2025 JP 2025017253
(71) Applicant: Toyota Jidosha Kabushiki Kaisha, Toyota-shi, Aichi-ken 471-8571 (JP)
(72) Inventor: INOUE, Shigeyuki, Toyota-shi, 471-8571 (JP); SUZUKI, Yusuke, Toyota-shi, 471-8571 (JP)
(74) Representative: TBK

(57) **Abstract**

A storage battery apparatus (100) that suppress effects on the storage battery apparatus interior caused by the application of a load from outside, while restraining an increase in weight of the storage battery apparatus (100). The storage battery apparatus (100) includes storage cells (111), a first cover (130) disposed below the storage cells (111), a second cover (140) disposed below the first cover (130), and a first fiber-containing resin member (143). The first fiber-containing resin member (143) is in contact with at least one of the first cover or (130) the second cover (140), and is disposed to be superposed with the storage cell (111) as seen in a vertical direction.

## Description

### BACKGROUND

### Technical Field

The present disclosure relates to a storage battery apparatus, particularly to a storage battery apparatus to be mounted at a vehicle, and to a storage battery apparatus vehicle mounting structure.

### Related Art

Heretofore, various structures of a storage battery apparatus have been proposed for suppressing effects on the interior of the storage battery apparatus caused by the application of loads from outside (for example, interference with a road surface and the like).

For example, a storage battery apparatus recited in Japanese Patent Application Laid-Open (JP-A) No. 2023-046945 is disclosed as being provided with a lower case and a share panel that is disposed below the lower case.

In a storage battery apparatus structured as mentioned above, strength of the share panel (a protective panel) must be improved in order to suppress effects on the interior of the storage battery apparatus caused by the application of stronger loads from outside. However, this may increase the weight of the storage battery apparatus.

The present disclosure provides a storage battery apparatus and a storage battery apparatus vehicle mounting structure that suppress effects on the storage battery apparatus interior due to the application of a load from outside, while restraining an increase in weight of the storage battery apparatus.

### SUMMARY

A storage battery apparatus according to a first aspect includes: a storage cell; a first cover disposed below the storage cell; a second cover disposed below the first cover; and a first fiber-containing resin member that is in contact with at least one of the first cover or the second cover, the first fiber-containing resin member being disposed to be superposed with the storage cell as seen in a vertical direction.

According to the storage battery apparatus according to the first aspect, the first fiber-containing resin member is provided that is in contact with at least one of the first cover or the second cover, and that is superposed with the storage cell as seen in a vertical direction. As a result, strength of the at least one of the first cover or the second cover below the storage cell is improved. Therefore, while an increase in weight of the storage battery apparatus is restrained compared to a structure that employs a member fabricated of metal, strength of the storage battery apparatus below the storage cell may be improved. Thus, for example, when a load is applied to the storage battery apparatus from below, effects on the storage battery apparatus interior may be suppressed.

In a storage battery apparatus according to a second aspect, in the first aspect, a plural number of the storage cell are provided, the plural storage cells are disposed in a row in a first direction, and the first fiber-containing resin member extends in the first direction and is disposed to be superposed with the plural storage cells as seen in the vertical direction.

According to the storage battery apparatus according to the second aspect, the first fiber-containing resin member extends in the first direction and is disposed to be superposed in the vertical direction with the plural storage cells. As a result, strength of the at least one of the first cover or the second cover below the plural storage cells is improved. Therefore, for example, when a load is applied to the storage battery apparatus from below, effects on the storage battery apparatus interior may be suppressed further.

In a storage battery apparatus according to a third aspect, in the second aspect, the first fiber-containing resin member is disposed between the first cover and the second cover.

According to the storage battery apparatus according to the third aspect, the first fiber-containing resin member is disposed between the first cover and the second cover. As a result, for example, when a load is applied to the storage battery apparatus from below, the first fiber-containing resin member is nipped by the first cover and the second cover, which are both members with relatively high rigidity, before the load is transmitted upward. Therefore, upward displacement of the first fiber-containing resin member with relatively high strength below the storage cells may be suppressed, and effects on the storage battery apparatus interior may be suppressed further.

In a storage battery apparatus according to a fourth aspect, the second aspect further includes a first reinforcement that extends in the first direction and is disposed at one side of the storage cells in a second direction that is orthogonal to the first direction, wherein one end portion in the second direction of the first fiber-containing resin member is disposed to be superposed with the first reinforcement as seen in the vertical direction.

According to the storage battery apparatus according to the fourth aspect, the one end portion in the second direction of the first fiber-containing resin member is disposed to be superposed with the first reinforcement in the vertical direction. As a result, when a load is applied to the storage battery apparatus from below, upward displacement of the first fiber-containing resin member is limited by the first reinforcement. Therefore, the storage battery apparatus may more assuredly bear the load applied from below in a region in which the first fiber-containing resin member with relatively large strength is disposed below the storage cells, and effects on the storage battery apparatus interior may be suppressed further.

A storage battery apparatus vehicle mounting structure according to a fifth aspect includes a storage battery apparatus according to any one of the first to fourth aspects, a vehicle includes a vehicle framework member that is disposed to be superposed with the storage battery apparatus as seen in a vehicle vertical direction and that extends in a vehicle width direction, and the first fiber-containing resin member is disposed to be superposed with the vehicle framework member as seen in the vehicle vertical direction.

According to the storage battery apparatus vehicle mounting structure according to the fifth aspect, the first fiber-containing resin member is disposed to be superposed with the vehicle framework member as seen in the vehicle vertical direction. As a result, strength of the storage battery apparatus below the storage cells that are disposed to be superposed with the vehicle framework member as seen in the vehicle vertical direction is improved. Therefore, when a load is applied to the storage battery apparatus from below, the storage battery apparatus is nipped against the vehicle framework member. Thus, effects on the storage battery apparatus interior may be suppressed below the vehicle framework member, which is a region at which a chance of a load being applied to the storage battery apparatus is relatively high.

In a storage battery apparatus vehicle mounting structure according to a sixth aspect, in the fifth aspect, the storage battery apparatus further includes a storage battery module that contains a plural number of the storage cell, and the first fiber-containing resin member extends from an end portion at a vehicle front side of the storage battery module to a central portion in a vehicle front- rear direction of the storage battery module.

According to the storage battery apparatus vehicle mounting structure according to the sixth aspect, the first fiber-containing resin member is provided to extend from the end portion at the vehicle front side in a vehicle front- rear direction of the storage battery module to the central portion in a vehicle front- rear direction of the storage battery module. As a result, strength of the storage battery apparatus is improved from the end portion at the vehicle front side of the storage battery module to the central portion in a vehicle front- rear direction. Therefore, when a load is applied to the storage battery apparatus from below, effects on the storage battery apparatus interior may be suppressed between the end portion at the vehicle front side of the storage battery module and the central portion in a vehicle front-rear direction, which is a region at which a chance of the load being applied to the storage battery apparatus from below is relatively high.

In a storage battery apparatus vehicle mounting structure according to a seventh aspect, the sixth aspect further includes a second reinforcement that extends in the vehicle width direction, and the first fiber-containing resin member extends from the end portion at the vehicle front side of the storage battery module to the second reinforcement.

According to the storage battery apparatus vehicle mounting structure according to the seventh aspect, the first fiber-containing resin member is provided to extend to the second reinforcement from the end portion at the vehicle front side in a vehicle front- rear direction of the storage battery module. As a result, strength of the storage battery apparatus is improved from the end portion at the vehicle front side of the storage battery module to the second reinforcement, and when, for example, a load is applied to the storage battery apparatus from below, upward displacement of the first fiber-containing resin member at the central portion thereof in a vehicle front- rear direction is limited. Therefore, when a load is applied to the storage battery apparatus from below, effects on the storage battery apparatus interior may be suppressed further between the end portion at the vehicle front side of the storage battery module and the second reinforcement, which is a region at which a chance of a load being applied to the storage battery apparatus from below is relatively high. Meanwhile, the storage battery apparatus may more assuredly bear the load applied from below in a region in which the first fiber-containing resin member with relatively large strength is disposed below the storage cells, and effects on the storage battery apparatus interior may be suppressed further.

In a storage battery apparatus according to an eighth aspect, any one of the first to fourth aspects further includes a second fiber-containing resin member that is in contact with one of the first cover and the second cover and that is disposed to be superposed with both the storage cell and the first fiber-containing resin member as seen in the vertical direction.

According to the storage battery apparatus according to the eighth aspect, the second fiber-containing resin member is provided that is in contact with at least one of the first cover or the second cover and that is superposed with both the storage cell and the first fiber-containing resin member as seen in a vertical direction. As a result, because the second fiber-containing resin member with relatively high strength is disposed below the storage cells in addition to the first fiber-containing resin member, the strength is improved further. Therefore, when a load is applied to the storage battery apparatus from below, effects on the storage battery apparatus interior may be suppressed further.

According to the storage battery apparatus and storage battery apparatus vehicle mounting structure relating to the present disclosure, a storage battery apparatus may be provided that suppresses effects on the storage battery apparatus interior when a load is applied from outside, while restraining an increase in weight of the storage battery apparatus.

### BRIEF DESCRIPTION OF THE DRAWINGS

Exemplary embodiments of the present invention will be described in detail based on the following figures, wherein:
Fig. 1 is an exploded perspective view showing schematics of a vehicle mounting structure of a storage battery apparatus 100 according to a first exemplary embodiment;
Fig. 2 is an exploded perspective view showing schematics of the storage battery apparatus 100 shown in Fig. 1;
Fig. 3 is a perspective view showing a storage battery module 110 that is shown in Fig. 2;
Fig. 4 is a sectional diagram of the storage battery apparatus 100 shown in Fig. 1, seen in a vehicle front- rear direction;
Fig. 5 is a view, seen in the vehicle front- rear direction, in which a reinforcement 131 that is shown in Fig. 4 is magnified;
Fig. 6 is a sectional diagram in which the vehicle mounting structure of the storage battery apparatus 100 shown in Fig. 1 is seen in the vehicle width direction; and
Fig. 7 is a sectional diagram in which a storage battery apparatus according to a second exemplary embodiment is seen in the vehicle front- rear direction.

### DETAILED DESCRIPTION

Below, a storage battery apparatus according to a present exemplary embodiment is described with reference to the drawings. An arrow UP, an arrow FR and an arrow RH that are shown as appropriate in the drawings indicate, respectively, an upper direction in the vehicle vertical direction of a vehicle V in which a vehicle storage battery apparatus 10 is mounted, a front direction in a vehicle front- rear direction, and a right direction in a vehicle left-and-right direction (vehicle width direction). Where simply the directions upper, lower, front, rear, left and right are used in the descriptions below, unless specifically described otherwise, these indicate, respectively, upper and lower in the vehicle vertical direction, front and rear in the vehicle front- rear direction, and left and right in the vehicle left-and-right direction (vehicle width direction). Furthermore, where the positional relationships above, below, forward, rearward, leftward and rightward are used, unless specifically described otherwise, these indicate, respectively, above and below in the vehicle vertical direction, forward and rearward in the vehicle front- rear direction, and leftward and rightward in the vehicle left-and-right direction (the vehicle width direction).

Unless particularly specified in this Description, each element is not limited to being a single element but may be plurally provided. In the drawings, the same reference symbol is assigned to elements that are substantially the same, and duplicative descriptions are omitted from the Description.

### - First Exemplary Embodiment -

### Overall Structure

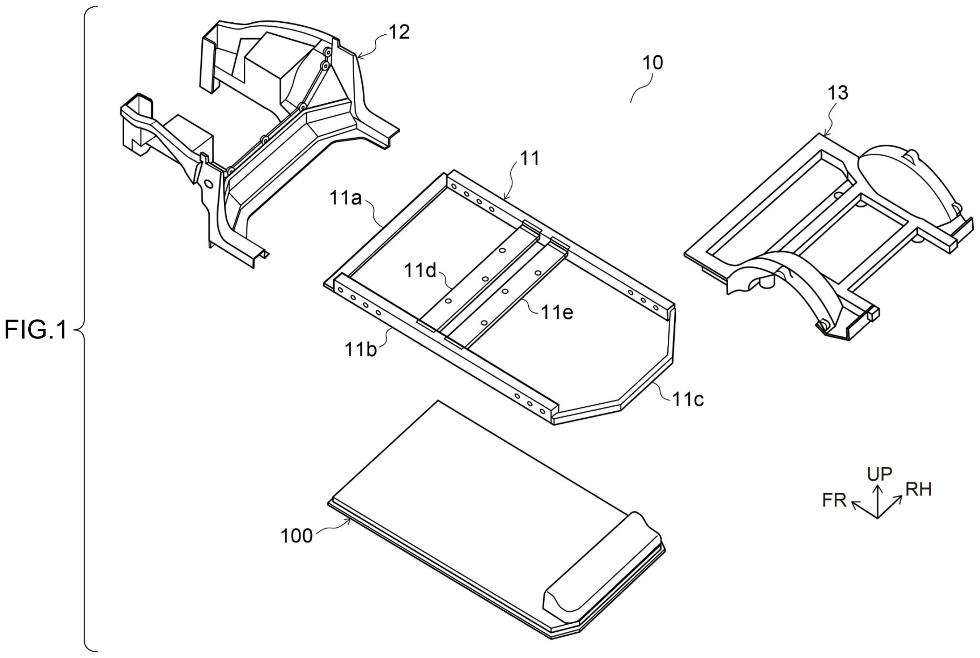

Fig. 1 is an exploded perspective view showing schematics of a vehicle mounting structure of a storage battery apparatus 100 according to a first exemplary embodiment. As shown in Fig. 1, the storage battery apparatus 100 is mounted below a vehicle framework 10. For example, peripheral edge portions of the storage battery apparatus 100 are joined to the vehicle framework 10.

The vehicle framework 10 includes a center module 11, a front module 12 disposed forward of the center module 11, and a rear module 13 to rearward of the center module 11. The front module 12 and the rear module 13 may each be formed by joining plural framework members together, or partial frameworks may be integrally formed by a method such as casting or the like.

The center module 11 includes a front frame member 11a, a pair of side frame members 11b, a rear frame member 11c, a front cross member 11d and a rear cross member 11e. Both ends in the left-and-right direction of each of the front cross member 11d and the rear cross member 11e are joined to the pair of side frame members 11b.

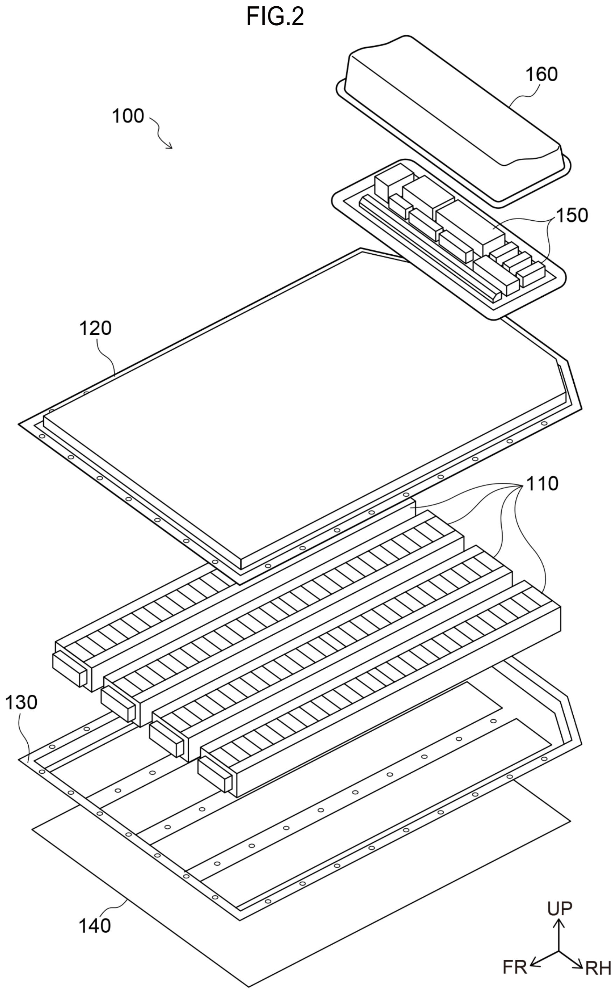

Fig. 2 is a perspective view showing storage battery modules 110 that are shown in Fig. 1. The storage battery apparatus 100 is provided with a plural number of the storage battery modules 110. For example, the plural storage battery modules 110 are plurally disposed in a row in the left-and-right direction. As described below, as an example, each storage battery module 110 contains plural storage cells that that are disposed in a row in the front- rear direction. The plural storage battery modules 110 may be disposed in a row in the front- rear direction, in which case the plural storage cells may be disposed in rows in the left-and-right direction.

The storage battery modules 110 are accommodated in a case that is structured by an upper cover 120 and a lower cover 130. The upper cover 120 and lower cover 130 are, for example, joined together by a publicly known method such as fastening, an adhesive material or the like. More specifically, the upper cover 120 is disposed above the storage cells. The lower cover 130, which serves as a first cover, is disposed below the storage cells.

A protective panel 140, which serves as a second cover, is provided below the lower cover 130. As described below, the protective panel 140 is joined to the lower cover 130 by, for example, a publicly known method such as fastening, an adhesive material or the like.

The upper cover 120 may separate at least some of a vehicle cabin interior and exterior in at least a region at the front side relative to a front- rear direction central portion of the upper cover 120, performing the function of a floor panel. In this structure, the upper cover 120 is joined to the front cross member 11d or rear cross member 11e using, for example, a publicly known method such as fastening or the like.

Battery equipment 150 is disposed above the upper cover 120 at least in a region at the rear side relative to the front- rear direction central portion of the upper cover 120. The battery equipment is electrically connected to, for example, sensors and the like. The sensors detect conditions such as temperature, voltage, current and the like of storage cells, which are described in more detail below. As an example, the battery equipment 150 includes one or more selected from a battery management system (BMS), an electronic control unit (ECU), a DC-DC converter, a system main relay (SMR) and the like.

The battery equipment 150 is covered from above by an equipment cover 160. The equipment cover 160 is joined to an equipment stand on which the battery equipment 150 is disposed. Thus, the equipment cover 160 accommodates the battery equipment 150. The equipment cover 160 may be joined to the upper cover 120 to accommodate the battery equipment 150.

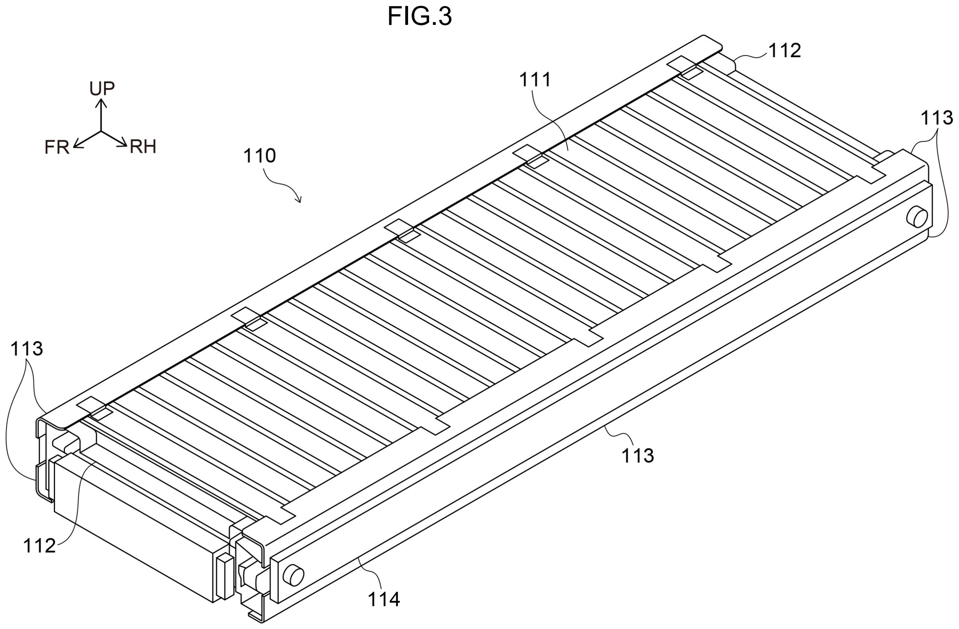

Fig. 3 is a perspective view showing each storage battery module 110 shown in Fig. 2. The storage battery module 110 is structured with plural storage cells 111 arrayed in a row in the front- rear direction. The storage cells 111 may each be provided with electrode terminals at, for example, both ends in the left-and-right direction. The electrode terminals of each storage cell 111 are not limited to being provided at both ends in the left-and-right direction but may be provided only at one end in the left-and-right direction. The electrode terminals of the storage cell 111 may instead be provided at both ends in the vertical direction, and may be provided only at one end in the vertical direction. The storage battery module 110 according to the first exemplary embodiment illustrates an example in which the storage battery module 110 includes a plural number of the storage cells 111 disposed in a row in the front- rear direction. However, it is sufficient that the storage battery module 110 includes a plural number of the storage cells 111. The storage battery module 110 is not limited to the mode according to the present exemplary embodiment.

Inter-cell members may be disposed between adjacent storage cells 111. Each inter-cell member may be, for example, a cooler, a heat-shielding member, an electrical insulation member or a resilient member. Buffer members, which are described in more detail below, may be disposed between at least some adjacent storage cells 111. When the storage battery module 110 is structured with the buffer members, displacement of the storage cells 111 in the front- rear direction within the storage battery module 110 may be more assuredly suppressed.

A pair of end plates 112 are disposed at each of two ends of the storage cells 111 that are plurally disposed in a row in the front- rear direction. The pair of end plates 112 are linked by a pair of side plates 113 and constrain displacement of the plural storage cells 111 in the front- rear direction.

The storage cells 111 that are plurally disposed in a row in the front- rear direction may have a cell-to-pack (CTP) structure in which a portion of a face of a case accommodating the storage battery apparatus 100 is disposed at least at one end portion of the storage cells 111. Thus, efficient use of space inside the storage battery apparatus may be improved.

The storage cells 111 that are plurally disposed in a row in the front- rear direction may have a cell-to-chassis (CTC) structure in which a portion of the vehicle framework 10 is disposed at least at one end portion of the storage cells 111. Thus, efficient use of space inside the storage battery apparatus may be improved and the plural storage cells may be more securely retained.

A bus bar module 114 is provided at electrode terminals 115 of the storage cells 111. The bus bar module 114 electrically connects between the electrode terminals 115 of the adjacent storage cells 111. For example, the bus bar module 114 electrically connects between the electrode terminals 115 of the adjacent storage cells 111 and forms portions of a circuit. However, the bus bar module 114 is not limited to connecting between the electrode terminals 115 of adjacent storage cells 111 and may electrically connect between the electrode terminals 115 of storage cells 111 that are not adjacent in the storage battery module 110.

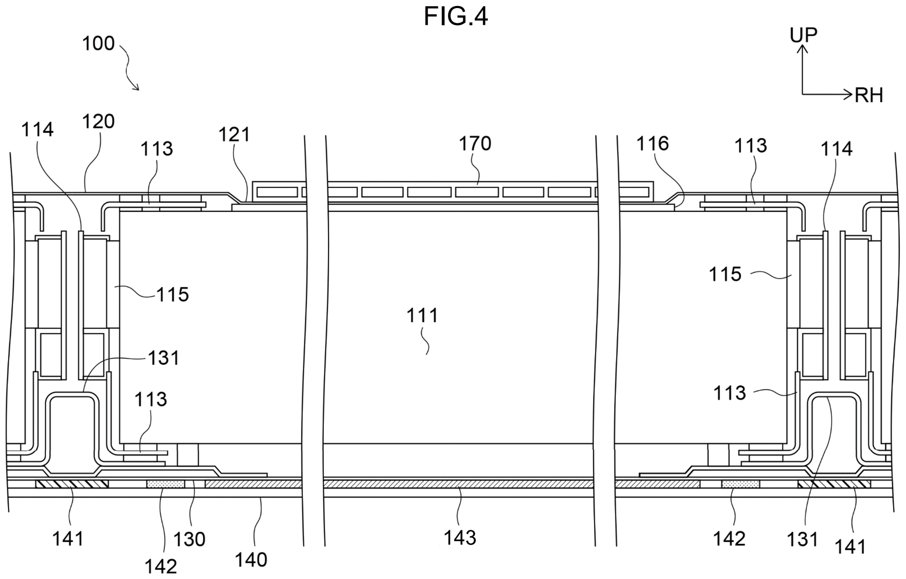

The storage battery module 110 has a structure in which an intermediary member 117, which is not shown in Fig. 4, is provided between a pair of adjacent storage cells 111.

The intermediary member 117 is a frame member formed of, for example, a metal such as iron, aluminium or the like. The intermediary member 117 is connected to, for example, end plates 112c and side plates 113c, and suppresses deformation of the storage cells 111 in the front- rear direction.

The intermediary member 117 is disposed to project beyond the storage cells 111 in, for example, one or both directions in the left-and-right direction. The intermediary member 117 may also be disposed to project beyond the storage cells 111 in, for example, one or both directions in the vertical direction.

The intermediary member 117 may be disposed at the middle of the storage battery module 110 in the front- rear direction. When the storage battery module 110 contains n of the intermediary member 117, the n intermediary members 117 may be disposed to divide the storage battery module 110 into n+1 equal portions in the front- rear direction.

Fig. 4 is a sectional diagram of the storage battery apparatus 100 shown in Fig. 1, seen in a vehicle front- rear direction. The reinforcement 131 extending in the front- rear direction is plurally provided above the lower cover 130. The reinforcements 131 are spaced apart in the left-and-right direction. The storage battery modules 110 provided with the plural storage cells 111 are disposed between the plurally provided reinforcements 131. Each storage battery module 110 is joined to the reinforcements 131 via, for example, adhesive material. Rather than adhesive material, the storage battery modules 110 may be joined to the reinforcements 131 by a publicly known method such as fastening, welding or the like.

In the structure described above, gaps are formed in the vertical direction between the storage cells 111 and the lower cover 130. For example, a distance between the storage cells 111 and the lower cover 130 in the vertical direction is greater than a distance between the lower case and the protective panel in the vertical direction, which is described in more detail below. In this structure, application of a load to the storage cells 111 when the lower cover 130 or protective panel 140 is deformed toward the side thereof at which the storage cells are disposed may be suppressed.

The lower cover 130 may have a thickness in the vertical direction of at least 0.5 mm and at most 5 mm. The thickness is more preferably at least 0.5 mm and at most 3 mm, and even more preferably at least 0.5 mm and at most 1 mm.

The lower cover 130 is constituted of, for example, iron, and may be constituted of aluminium. The lower cover 130 is not limited to iron and may be constituted of, for example, a compound such as an alloy including iron or aluminium, or the like.

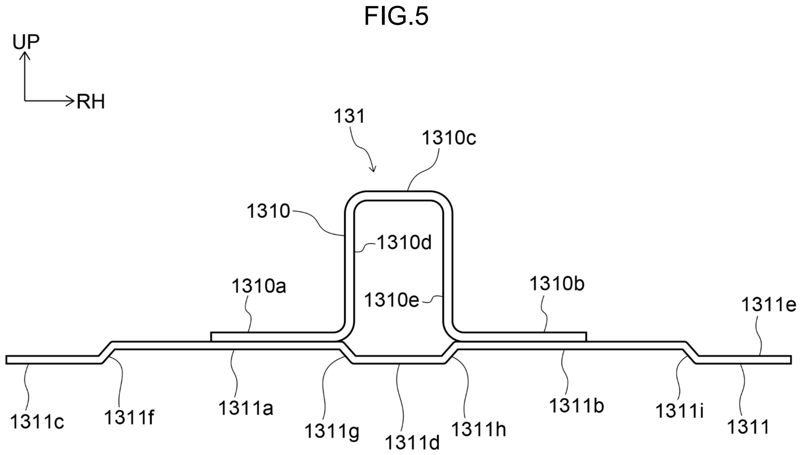

Fig. 5 is a view, seen in the vehicle front- rear direction, in which the reinforcement 131 that is shown in Fig. 4 is magnified. As shown in Fig. 5, each reinforcement 131 is structured by plural members: an upper side reinforcement 1310 and a lower side reinforcement 1311. The upper side reinforcement 1310 includes a first flat portion 1310a, a second flat portion 1310b, a third flat portion 1310c that is disposed upward of the first flat portion 1310a and the second flat portion 1310b, a first linking portion 1310d that links the first flat portion 1310a with the third flat portion 1310c, and a second linking portion 1310e that links the second flat portion 1310b with the third flat portion 1310c. The lower side reinforcement 1311 includes a fourth flat portion 1311a, a fifth flat portion 1311b, a sixth flat portion 1311c, a seventh flat portion 1311d and eighth flat portion 1311e that are disposed downward relative to the fourth flat portion 1311a and fifth flat portion 1311b, a third linking portion 1311f that links the fourth flat portion 1311a with the sixth flat portion 1311c, a fourth linking portion 1311g that links the fourth flat portion 1311a with the seventh flat portion 1311d, a fifth linking portion 1311h that links the fifth flat portion 1311b with the seventh flat portion 1311d, and a sixth linking portion 1311i that links the fifth flat portion 1311b with the eighth flat portion 1311e. The upper side reinforcement 1310 and lower side reinforcement 1311 may be formed integrally by a method such as casting, extrusion or the like.

Then, as shown in Fig. 4 and Fig. 5, the bus bar module 114 that electrically connects the electrode terminals 115 provided at the storage cells 111 is disposed to be superposed with the third flat portion provided at each reinforcement 131 in the vertical direction. The electrode terminals 115 provided at the storage cells 111 may be disposed to be superposed with the third flat portion in the vertical direction. Unless specifically mentioned otherwise in this Description, the meaning of "is disposed to be superposed in the vertical direction" is intended to include at least a portion being disposed to be superposed in the vertical direction.

Returning to Fig. 4, the upper cover 120 of the storage battery apparatus 100 is described. The upper cover 120 is provided above the storage cells 111. Above the storage cells, the upper cover 120 is provided with a projection portion 121 that projects downward. Above the projection portion 121, a cooler 170 is disposed in contact with the projection portion 121. Below the projection portion 121, a thermal conduction member 116 is disposed in contact both with the storage cells 111 and with the upper cover 120.

The protective panel 140 is joined below the lower cover 130. A gap is provided between the protective panel 140 and the lower cover 130. A first resin member 141 is disposed between the protective panel 140 and the lower cover 130. The first resin member 141 is disposed in contact with the lower cover 130. The first resin member 141 is also disposed in contact with the protective panel 140. According to this structure, rigidity of the lower cover and the protective panel, specifically bending rigidity and even more specifically geometrical moment of inertia, may be improved while an increase in weight of the storage battery apparatus 100 is restrained. When, for example, a load is applied to the storage battery apparatus 100 from outside due to road surface interference or the like, effects on the interior of the storage battery apparatus 100 and particularly on the storage cells 111 may be suppressed.

The first resin member 141 may be disposed in contact with matching locations of both the lower cover 130 and the protective panel 140. Unless specifically mentioned otherwise in this Description, the meaning of the term "is in contact" is intended to include at least a portion being in contact and is intended to encompass contact over the whole of opposing surfaces.

The protective panel 140 is constituted of, for example, aluminium, and may be constituted of iron. The lower cover 130 is not limited to iron and may be constituted of, for example, a compound such as an alloy including iron or aluminium, or the like.

The protective panel 140 may have a thickness in the vertical direction of at least 1 mm and at most 5 mm. The thickness is more preferably at least 2 mm and at most 4 mm.

The first resin member 141 may have a width in the left-and-right direction of at least 3 mm and at most 20 mm. The width is more preferably at least 5 mm and at most 20 mm, and even more preferably at least 10 mm and at most 20 mm.

The first resin member 141 may have a thickness in the vertical direction of at least 1 mm and at most 5 mm. The thickness is more preferably at least 2 mm and at most 4 mm.

The first resin member 141 may be constituted of, for example, one or more resins selected from the group consisting of at least polyethylenes (PE), polypropylenes (PP), PE foams, PP foams, glass fiber-reinforced plastics (GFRP), carbon fiber-reinforced plastics (CFRP) and the like.

The first resin member 141 may be joined to the lower cover 130 via an adhesive material at the upper face of the first resin member 141. The first resin member 141 may be joined to the protective panel 140 via an adhesive material at the lower face of the first resin member 141. Unless specifically mentioned otherwise in this Description, the meaning of the term "is in contact" is intended to include at least a portion being in contact and is intended to encompass contact over the whole of opposing surfaces.

The first resin member 141 may be constituted of a resin with adhesiveness, for example, one or more adhesive materials selected from the group consisting of at least urethane-based adhesive materials, epoxy-based adhesive materials, silicone-based adhesive materials, acryl-based adhesive materials and the like. With this constitution, one or both of the upper face and lower face of the first resin member 141 may be joined to, respectively, the lower cover 130 or protective panel 140 without a separate adhesive material being provided.

The first resin member 141 extends in the front- rear direction and is disposed to be superposed with the plural storage cells 111 in the vertical direction. The first resin member 141 is also disposed to be superposed with the reinforcement 131 in the vertical direction. According to this structure, when a load is applied to the storage battery apparatus 100 from outside, the applied load may be transmitted to the reinforcements 131 that have relatively high rigidity inside the storage battery apparatus 100. Thus, effects on the interior of the storage battery apparatus 100, particularly on the storage cells 111, may be suppressed further.

The first resin member 141 is disposed to be superposed with the storage cells 111 in the vertical direction at central portions in the left-and-right direction of the storage cells 111. According to this structure, when a load is applied to the storage battery apparatus 100 from outside, an excessive deformation amount of the protective panel 140 below the storage cells 111 may be suppressed. Thus, effects on the interior of the storage battery apparatus 100, particularly on the storage cells 111, may be suppressed further.

Second resin members 142 are disposed between the protective panel 140 and the lower cover 130. The second resin members 142 are each disposed in contact with the protective panel 140.

The second resin member 142 may be disposed with at least a portion in contact with matching locations of both the lower cover 130 and the protective panel 140.

The second resin member 142 may have a width in the left-and-right direction of at least 3 mm and at most 20 mm. The width is more preferably at least 5 mm and at most 20 mm, and even more preferably at least 10 mm and at most 20 mm.

The second resin member 142 may have a thickness in the vertical direction of at least 1 mm and at most 5 mm. The thickness is more preferably at least 2 mm and at most 4 mm.

The second resin member 142 is constituted with a lower Young's modulus than the first resin member 141. The second resin member 142 may be constituted of, for example, one or more resins selected from the group consisting of at least polyethylenes (PE), polypropylenes (PP), PE foams, PP foams, glass fiber-reinforced plastics (GFRP), carbon fiber-reinforced plastics (CFRP) and the like. According to this structure, regions that transmit relatively more of a load on the protective panel 140 and regions that absorb relatively more of the load on the protective panel 140 are formed. Thus, deformation locations of the protective panel 140 may be specified easily, and when a load is applied to the storage battery apparatus 100 from outside, effects on the interior of the storage battery apparatus 100 and particularly on the storage cells 111 may be suppressed.

The second resin member 142 may include an adhesive material. The second resin member 142 may be constituted of, for example, one or more adhesive materials selected from the group consisting of at least urethane-based adhesive materials, epoxy-based adhesive materials, silicone-based adhesive materials, acryl-based adhesive materials and the like. With this constitution, one or both of the upper face and lower face of the second resin member 142 may be joined to, respectively, the lower cover 130 or protective panel 140 without a separate adhesive material being provided. According to this structure, adhesion locations between the lower cover 130 and protective panel 140 may be increased in number and adhesion strength between the lower cover 130 and protective panel 140 may be improved without a number of fastening components increasing.

The second resin member 142 may be constituted to have greater adhesive strength to the lower cover 130 or protective panel 140 than the first resin member 141. As a result, the second resin member 142 may be joined to the lower panel and the protective panel more securely.

The second resin member 142 extends in the front- rear direction and is disposed to be superposed with the plural storage cells 111 in the vertical direction. The second resin member 142 is disposed to be superposed with the reinforcement 131 in the vertical direction. According to this structure, when a load is applied to the storage battery apparatus 100 from outside, the load is transmitted to the reinforcement 131 that is relatively high in rigidity. Thus, effects on the interior of the storage battery apparatus 100, particularly on the storage cells 111, may be suppressed further.

The second resin member 142 is disposed to be superposed with the storage cells 111 in the vertical direction at central portions in the left-and-right direction of the storage cells 111.

The plural first resin members 141 are disposed in a row in the left-and-right direction. The first resin members 141 may be disposed to be interspersed with the plural second resin members 142 in the left-and-right direction. According to this structure, plural locations at which a load is transmitted when the protective panel 140 deforms upward may be provided while an increase in weight of the storage battery apparatus 100 is restrained. Therefore, a gap between the lower cover 130 and protective panel 140 to allow the protective panel 140 to deform and absorb an applied load may be reduced, and the storage battery apparatus 100 may be reduced in size.

The plural second resin members 142 are disposed in a row in the left-and-right direction. The second resin members 142 may be disposed to be interspersed with the plural first resin members 141 in the left-and-right direction.

First fiber-containing resin members 143 are disposed between the protective panel 140 and the lower cover 130. Each first fiber-containing resin member 143 is disposed in contact with the lower cover 130. The first fiber-containing resin member 143 is also disposed in contact with the protective panel 140.

### Structures of Principal Elements

The first fiber-containing resin member 143 is a resin member containing a fiber material, and may be constituted of, for example, one or more resins selected from the group consisting of at least polyethylenes (PE), polypropylenes (PP), PE foams, PP foams, glass fiber-reinforced plastics (GFRP), carbon fiber-reinforced plastics (CFRP) and the like.

The fiber material is constituted of, for example, at least one type of fiber selected from the group consisting of para-aramid fibers, meta-aramid fibers, polymer polyethylene fibers, polyarylate fibers, polyvinyl alcohol (PVA) fibers, polypara-phenylene benzobisoxazole (PBO) fibers, polyphenylene sulfide (PPS) fibers, polyimide fibers, PAN carbon fibers, pitch carbon fibers, glass fibers, boron fibers, silicon carbide fibers and so forth.

The first fiber-containing resin member 143 is a structure with higher strength than the first resin member 141. The meaning of the term "higher strength" as used herein is intended to include, for example, one or more of tensile strength, compressive strength, bending strength and the like being relatively higher.

The first fiber-containing resin member 143 may have a thickness in the vertical direction of at least 1 mm and at most 5 mm. The thickness is more preferably at least 2 mm and at most 4 mm.

The first fiber-containing resin member 143 is disposed to be superposed with the storage cells 111 in the vertical direction. The first fiber-containing resin member 143 is disposed to be superposed in the vertical direction with central portions of the storage cells 111 in the left-and-right direction.

The first fiber-containing resin member 143 is disposed to extend in the left-and-right direction at least from one to the other of adjacent reinforcements 131. End portions of the first fiber-containing resin member 143 in the left-and-right direction are disposed to be superposed in the vertical direction with a sixth flat portion (and eighth flat portion) of the reinforcements 131.

The first fiber-containing resin member 143 is joined to at least one of the lower cover 130 or the protective panel 140 by the use of, for example, a publicly known method such as an adhesive material or the like.

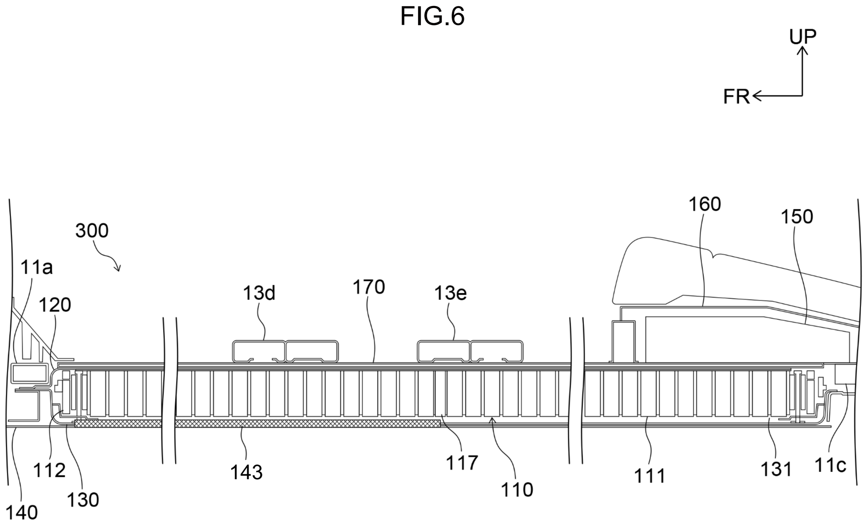

Fig. 6 is a sectional diagram in which the vehicle mounting structure of the storage battery apparatus 100 shown in Fig. 1 is seen in the vehicle width direction. The first fiber-containing resin member 143 is disposed to extend in the front- rear direction and is disposed to be superposed in the vertical direction with both of a front seat cross member 13d and a rear seat cross member 13e.

The first fiber-containing resin member 143 is disposed to extend in the front- rear direction from an end portion at the front side of the storage battery module 110 to a central portion in the front- rear direction of the storage battery module 110. The meaning of "is disposed ... from the end portion at the front side of the storage battery module 110 to the central portion in the front- rear direction of the storage battery module 110" is intended to include the first fiber-containing resin member 143 being disposed at least from the front side end portion of the storage battery module 110 to the front- rear direction central portion of the storage battery module 110.

The first fiber-containing resin member 143 is disposed to extend in the front- rear direction at least from the end portion at the front side of the storage battery module 110 to the intermediary member 117 (the second reinforcement). The meaning of "is disposed ... from the end portion at the front side of the storage battery module 110 to the intermediary member 117" is intended to include the first fiber-containing resin member 143 being disposed at least from the front side end portion of the storage battery module 110 to the intermediary member 117. The above description illustrates an example in which the intermediary member 117 serves as the second reinforcement, but the second reinforcement may be a rigid member such as a cross member or the like that is disposed inside the storage battery apparatus and extends in the vehicle width direction.

### - Operation and Effects of the First Exemplary Embodiment -

Now, operation and effects of the storage battery apparatus 100 and vehicle mounting structure for the storage battery apparatus 100 according to the first exemplary embodiment are described.

In the storage battery apparatus 100 according to the first exemplary embodiment, as shown in Fig. 4, the first fiber-containing resin member 143 containing the fiber material is joined to at least one of the lower cover 130 or the protective panel 140. The first fiber-containing resin member 143 is disposed to be superposed in a vertical direction with the storage cells 111. As a result, strength of the at least one of the lower cover 130 or the protective panel 140 below the storage cells 111 is improved. Therefore, while an increase in weight of the storage battery apparatus 100 is restrained compared to a structure that employs a member fabricated of metal, strength of the storage battery apparatus 100 below the storage cells 111 may be improved. Thus, for example, when a load is applied to the storage battery apparatus 100 from below, effects on the interior of the storage battery apparatus 100 may be suppressed.

Now, other effects provided by the storage battery apparatus 100 according to the first exemplary embodiment are described in more detail.

Firstly, in the storage battery apparatus 100 according to the first exemplary embodiment as shown in Fig. 4, the first fiber-containing resin member 143 extends in a first direction and is disposed to be superposed in the vertical direction with the plural storage cells 111. As a result, strength of the at least one of the lower cover 130 or the protective panel 140 below the plural storage cells 111 is improved. Therefore, for example, when a load is applied to the storage battery apparatus 100 from below, effects on the interior of the storage battery apparatus 100 may be suppressed further.

Secondly, in the storage battery apparatus 100 according to the first exemplary embodiment as shown in Fig. 4, the first fiber-containing resin member 143 is disposed between the lower cover 130 and the protective panel 140. As a result, for example, when a load is applied to the storage battery apparatus 100 from below, the first fiber-containing resin member 143 is nipped by the lower cover 130 and the protective panel 140, which are both members with relatively high rigidity, before the load is transmitted upward. Therefore, upward displacement of the first fiber-containing resin member 143 with relatively high strength below the storage cells 111 may be suppressed, and effects on the storage battery apparatus interior may be suppressed further.

Thirdly, in the storage battery apparatus 100 according to the first exemplary embodiment as shown in Fig. 4, the one end portion in the second direction of the first fiber-containing resin member 143 is disposed to be superposed with the first reinforcement 131 in the vertical direction. As a result, when a load is applied to the storage battery apparatus 100 from below, upward displacement of the first fiber-containing resin member 143 is limited by the first reinforcement 131. Therefore, the storage battery apparatus 100 may more assuredly bear the load applied from below in a region in which the first fiber-containing resin member 143 with relatively large strength is disposed below the storage cells 111, and effects on the interior of the storage battery apparatus 100 may be suppressed further.

Fourthly, in the storage battery apparatus 100 according to the first exemplary embodiment as shown in Fig. 4, the first fiber-containing resin member 143 is disposed to be superposed with the front seat cross member 13d and the rear seat cross member 13e, which are vehicle framework members, as seen in the vehicle vertical direction. As a result, strength of the storage battery apparatus 100 below the storage cells 111 that are disposed to be superposed with the front seat cross member 13d and rear seat cross member 13e as seen in the vehicle vertical direction is improved. Therefore, when a load is applied to the storage battery apparatus 100 from below, the storage battery apparatus 100 is nipped against the front seat cross member 13d and rear seat cross member 13e. Thus, effects on the interior of the storage battery apparatus 100 may be suppressed below the front seat cross member 13d and the rear seat cross member 13e, which are regions at which chances of loads being applied to the storage battery apparatus 100 are relatively high.

Fifthly, the first fiber-containing resin member 143 extends from the end portion at the vehicle front side in the vehicle front- rear direction of the storage battery module 110 to the central portion in the vehicle front- rear direction of the storage battery module 110. As a result, strength of the storage battery apparatus 100 is improved from the end portion at the vehicle front side of the storage battery module 110 to the central portion in the vehicle front- rear direction. Therefore, when a load is applied to the storage battery apparatus 100 from below, effects on the interior of the storage battery apparatus 100 may be suppressed between the end portion at the vehicle front side of the storage battery module 110 and the central portion in the vehicle front- rear direction, which is a region at which a chance of a load being applied to the storage battery apparatus 100 from below is relatively high.

Sixthly, the first fiber-containing resin member 143 of the storage battery apparatus 100 extends from the end portion at the vehicle front side of the storage battery module 110 to the second reinforcement 117. As a result, strength of the storage battery apparatus 100 is improved from the end portion at the vehicle front side of the storage battery module 110 to the second reinforcement 117, and when, for example, a load is applied to the storage battery apparatus 100 from below, upward displacement of the first fiber-containing resin member 143 at the central portion thereof in the vehicle front- rear direction is limited. Therefore, when a load is applied to the storage battery apparatus 100 from below, effects on the interior of the storage battery apparatus 100 may be suppressed further between the end portion at the vehicle front side of the storage battery module 110 and the second reinforcement 117, which is a region at which a chance of a load being applied to the storage battery apparatus 100 from below is relatively high. Meanwhile, the storage battery apparatus 100 may more assuredly bear the load applied from below in a region in which the first fiber-containing resin member 143 with relatively large strength is disposed below the storage cells 111, and effects on the interior of the storage battery apparatus 100 may be suppressed further.

### - Second Exemplary Embodiment -

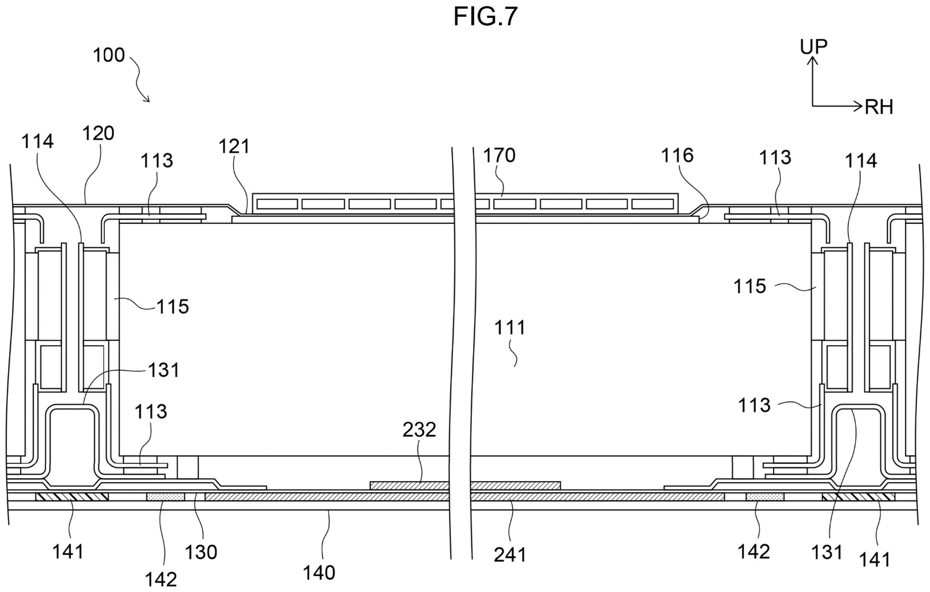

Fig. 7 is a sectional diagram in which a storage battery apparatus according to a second exemplary embodiment is seen in the vehicle front- rear direction. A storage battery apparatus 200 according to the second exemplary embodiment includes, in addition to the first fiber-containing resin member 143 disclosed in the first exemplary embodiment, a second fiber-containing resin member 232. The second fiber-containing resin member 232 is structured as a resin member containing a fiber material. Apart from the above descriptions, structures of the storage battery apparatus according to the second exemplary embodiment are substantially the same as in the first exemplary embodiment.

The fiber material is constituted of, for example, at least one type of fiber selected from the group consisting of para-aramid fibers, meta-aramid fibers, polymer polyethylene fibers, polyarylate fibers, polyvinyl alcohol (PVA) fibers, polypara-phenylene benzobisoxazole (PBO) fibers, polyphenylene sulfide (PPS) fibers, polyimide fibers, PAN carbon fibers, pitch carbon fibers, glass fibers, boron fibers, silicon carbide fibers and so forth.

The second fiber-containing resin member 232 is a structure with higher strength than the first fiber-containing resin member 143. The meaning of the term "higher strength" as used herein is intended to include, for example, one or more of tensile strength, compressive strength, bending strength and the like being relatively higher.

The second fiber-containing resin member 232 may have a thickness in the vertical direction of at least 1 mm and at most 5 mm. The thickness is more preferably at least 2 mm and at most 4 mm.

The second fiber-containing resin member 232 is joined to the lower cover 130 at a face (an upper face) of the lower cover 130 that opposes the storage cells 111.

The second fiber-containing resin member 232 is disposed to be superposed with the storage cells 111 in the vertical direction. The second fiber-containing resin member 232 is disposed to be superposed in the vertical direction with central portions of the storage cells 111 in the left-and-right direction.

The above description illustrates an example in which the second fiber-containing resin member 232 is joined to the lower cover 130 at the face of the lower cover 130 that opposes the storage cells 111 (the upper face). However, the second fiber-containing resin member 232 may be disposed to be joined to an upper face of the first fiber-containing resin member 143. The second fiber-containing resin member 232 may be disposed between the lower cover 130 and the protective panel 140, in which case the first fiber-containing resin member 143 may be disposed between the lower cover 130 and the protective panel 140, the first fiber-containing resin member 143 may be disposed above the second fiber-containing resin member 232, and the first fiber-containing resin member 143 may be disposed below the second fiber-containing resin member 232. The first fiber-containing resin member 143 may even be disposed below the protective panel 140.

### - Operation and Effects of the Second Exemplary Embodiment -

Now, operation and effects of the storage battery apparatus 200 according to the second exemplary embodiment are described.

As shown in Fig. 7, the storage battery apparatus 200 according to the second exemplary embodiment is additionally provided with the second fiber-containing resin member 232 that is in contact with one of the lower cover 130 and the protective panel 140 and is superposed both with the storage cells 111 and with the first fiber-containing resin member 143 as seen in the vertical direction. As a result, because the second fiber-containing resin member 232 with relatively high strength is disposed below the storage cells 111 in addition to the first fiber-containing resin member 143, strength is improved further. Therefore, when a load is applied to the storage battery apparatus 100 from below, effects on the interior of the storage battery apparatus 100 may be suppressed further.

It should be understood that the foregoing disclosed embodiments are all exemplary and are not limiting. The scope of the present disclosure is intended to be defined by the following claims and to encompass all modifications within the meaning and scope of equivalents to the claims.

## Claims

1. A storage battery apparatus (100), comprising:
a storage cell (111);
a first cover (130) disposed below the storage cell (111);
a second cover (140) disposed below the first cover (130); and
a first fiber-containing resin member (143) that is in contact with at least one of the first cover (130) or the second cover (140), the first fiber-containing resin member (143) being disposed to be superposed with the storage cell (111) as seen in a vertical direction.

2. The storage battery apparatus (100) according to claim 1, wherein:
a plurality of storage cells (111) are provided,
the plurality of storage cells (111) are disposed in a row in a first direction, and
the first fiber-containing resin member (143) extends in the first direction and is disposed to be superposed with the plurality of storage cells (111) as seen in the vertical direction.

3. The storage battery apparatus (100) according to claim 2, wherein the first fiber-containing resin member (143) is disposed between the first cover (130) and the second cover (140).

4. The storage battery apparatus (100) according to claim 2, further comprising a first reinforcement (131) that extends in the first direction and is disposed at one side of the storage cells (111) in a second direction that is orthogonal to the first direction,
wherein one end portion, in the second direction, of the first fiber-containing resin member (143) is disposed to be superposed with the first reinforcement (131) as seen in the vertical direction.

5. A storage battery apparatus vehicle (V) mounting structure comprising the storage battery apparatus (100) according to any one of claims 1 to 4, wherein:
a vehicle (V) includes a vehicle framework member (13d, 13e) that is disposed to be superposed with the storage battery apparatus (100) as seen in a vehicle vertical direction and that extends in a vehicle width direction, and
the first fiber-containing resin member (143) is disposed to be superposed with the vehicle framework member (13d, 13e) as seen in the vehicle vertical direction.

6. The storage battery apparatus vehicle (V) mounting structure according to claim 5, wherein:
the storage battery apparatus (100) further includes a storage battery module (110) that contains a plurality of storage cells (111), and
the first fiber-containing resin member (143) extends from an end portion at a vehicle front side of the storage battery module (110) to a central portion, in a vehicle front-rear direction, of the storage battery module (110).

7. The storage battery apparatus vehicle (V) mounting structure according to claim 6, wherein:
the storage battery apparatus (100) further includes a second reinforcement (117) that extends in the vehicle width direction, and
the first fiber-containing resin member (143) extends from the end portion at the vehicle front side of the storage battery module (110) to the second reinforcement (117).

8. The storage battery apparatus (100) according to any one of claims 1 to 4, further comprising a second fiber-containing resin member (232) that is in contact with one of the first cover (130) or the second cover (140) and that is disposed to be superposed with both the storage cell (111) and the first fiber-containing resin member (143) as seen in the vertical direction.
